Europäisches Patentamt

European Patent Office

Office européen des brevets

(19)

(11) **EP 1 381 442 B1**

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(21) Anmeldenummer: 02737981.7

(22) Anmeldetag: **23.04.2002**

(51) Int Cl.7: **B01D 35/22**, B01D 29/05

(86) Internationale Anmeldenummer:
**PCT/EP2002/004435**

(87) Internationale Veröffentlichungsnummer:
**WO 2002/085493 (31.10.2002 Gazette 2002/44)**

(54) **FILTERVORRICHTUNG**

FILTER DEVICE

DISPOSITIF DE FILTRATION

(84) Benannte Vertragsstaaten:
**BE DE FR GB IT NL**

(30) Priorität: **23.04.2001 DE 10119919**
**22.04.2002 DE 10217966**

(43) Veröffentlichungstag der Anmeldung:
**21.01.2004 Patentblatt 2004/04**

(73) Patentinhaber: **NFT Nanofiltertechnik GmbH**
**80802 München (DE)**

(72) Erfinder: **HOFMANN, Wilfried**
**81679 München (DE)**

(74) Vertreter: **von Bülow, Tam, Dr.**
**Patentanwaltskanzlei**
**Mailänder Strasse 13**
**81545 München (DE)**

(56) Entgegenhaltungen:
**EP-A- 0 341 573**       **WO-A-00/69547**
**DE-U- 7 225 662**       **GB-A- 2 088 235**
**US-A- 3 501 012**       **US-A- 4 533 471**

**Beschreibung**

Die Erfindung bezieht sich auf eine Filtervorrichtung zur Filterung von Fluiden gemäß dem Oberbegriff des Patentanspruches 1.

Eine solche Filtervorrichtung ist aus der DE 72 25 662 UI bekannt. Dort wird eine Tangential- oder Querstromfiltration durchgeführt, bei der überwiegend eine Tangentialströmung längs der Membran stattfindet.

Aus der DE 39 24 658 A1 ist eine weitere Filtervorrichtung bekannt, bei der zur Filtration feststoffhaltiger Flüssigkeiten mittels mindestens einer Filterfläche zur Verhinderung einer Filterkuchenbildung und einer verlegung der Filterporen vorgeschlagen wird, die Filterfläche in Bewegung zu versetzen. Alternativ oder zusätzlich kann in der zu filtrierenden Flüssigkeit eine Strömung erzeugt werden, die eine tangential zur Filterfläche gerichtete Geschwindigkeitskomponente von mindestens 0,1 m/sec aufweist. Zum Freihalten der Filterfläche wird dort vorzugsweise eine turbulente Strömung erzeugt, die beispielsweise durch ein vorbeiströmendes Gas-Flüssigkeitsgemisch entsteht. Es können aber auch mit Pumpen, Düsen, Rühraggregaten, Schikanen, Leitblechen, rotierenden Walzen oder Vibrationsvorrichtungen die gewünschten Turbulenzen erzeugt werden, die der Filterkuchenbildung entgegenwirken. Zusätzlich kann die Filterfläche auch elektrisch geladen werden, um Feststoffe abzustoßen.

Die bekannte Vorrichtung hat mehrere Schmutzwasserkammern und eine entsprechende Anzahl von Reinwasserkammern, die durch eine Membran voneinander getrennt sind. Die Hauptströmungsrichtung in den Schmutzwasserkammern erfolgt tangential zur Membran. Auch die Zufuhr der zu filtrierenden Flüssigkeit erfolgt parallel zur Membran. Wesentlich ist auch noch, daß die Filterung weitestgehend drucklos erfolgt. In den Schmutzwasserkammern kommt es vor den Filterflächen zu einer Anreicherung von Feststoffen der Flüssigkeit, die dann über Leitungen und Pumpen abgeschlämmt werden, was in Abhängigkeit von der Trübung der Flüssigkeit in den Schmutzwasserkammern erfolgen soll. Hierzu sind auch eine Meßsonde und ein Regelgerät vorgesehen, das die entsprechende Pumpe steuert.

Bei der Membranfiltration tritt das Phänomen der Verblockung bzw. des "Fouling" von Filtermembranen auf, bei dem im Verlauf der Filtration die Durchflußmenge pro Zeiteinheit (dV/dt) durch die Filtermembran bzw. das Filtermedium abnimmt. Verschiedene Teilprozesse tragen einzeln oder gemeinsam zum Fouling bei. Zum einen werden die Poren der Membran teilweise blockiert, was eine relativ schnelle Abnahme der Durchflußmenge zur Folge hat; andererseits bildet sich auf der stromaufwärtigen Seite des Filtermediums ein sogenannter "Filterkuchen" (oft auch als "Sekundärmembran" bezeichnet), der den Strömungswiderstand weiter erhöht und somit die Durchflußmenge durch das Filtermedium weiter, aber langsamer als beim Blockieren der Poren verringert. Auf dem Filterkuchen kann sich auch noch eine sog. Konzentrationspolarisationsschicht (concentration polarization layer) bilden.

Die verschiedenen, zum Fouling führenden Prozesse können unterteilt werden in reversible und irreversible Prozesse, die durch gewisse Maßnahmen wie z.B. Rückspülen (backflushing) umgekehrt bzw. nicht umgekehrt (z.B. Adsorption) werden können.

Darüber hinaus können sich die zurückgehaltenen Stoffe nicht nur auf der stromaufwärtigen Seite (Anströmseite) des Filters den Filterkuchen ausbilden, sondern zumindest teilweise in das Filtermedium eindringen und dort die Kanaloder Porenstrukturen blockieren. In diesem Fall ist eine Reinigung durch gängige Verfahren schwierig bis unmöglich.

Diese Mechanismen reduzieren die mögliche Nutzungsdauer (Standzeit) der Filtermedien und erhöhen somit die Kosten und den Aufwand (Wartung, Überwachung etc.) für die Filtration.

Zur Beseitigung des Filterkuchens sind nach dem Stand der Technik zahlreiche Ansätze, Verfahren und Einrichtungen bekannt. Verfahren zur Beseitigung der zurückgehaltenen Stoffe bzw. zur Reinigung des Filters umfassen physikalische und chemische Verfahren.

Bei den physikalischen Reinigungsverfahren werden z.B. Rechen- oder Rütteleinrichtungen genutzt. Bei solchen Verfahren wird der Filterkuchen durch den Rechen oder eine ähnliche Einrichtung von der stromaufwärtigen Seite des Filtermediums entfernt. Mitunter werden auch die Filter in Vibration versetzt oder wird turbulente Strömung erzeugt.

Zur Erzeugung turbulenter Strömungen werden z.B. Schikanen und/oder Frequenzgeber (wie z.B. Ultraschallgeneratoren) genutzt. In einigen Ausführungen nach dem Stand der Technik wird für einen Abtransport von Teilchen des Filterkuchens eine zur Filterfläche parallel gerichtete Strömung (Querströmung) z.B. mit Hilfe eines geeignet eingeleiteten Gases erzeugt. Solche Mechanismen erfordern allerdings für einen ausreichenden Durchfluß durch das Filtermedium große Filterflächen.

Dieser Kategorie von Reinigungsverfahren kann beispielsweise auch das sog. "Rückspülen" des Filters zugerechnet werden. Bei diesem Verfahren wird der Filtrationsprozeß unterbrochen, das Filtermedium in der der ursprünglichen Stromrichtung entgegengesetzten Richtung mit einem Reinigungsfluid gespült und der Filtrationsprozeß (mit einer gewissen "Vorlaufzeit") anschließend fortgesetzt.

Bei chemischen Verfahren wird beispielsweise das Filtermedium mit einer oder mehreren Reinigungslösungen gespült. Diese Reinigungslösungen können in dem Filtermedium nach der Filterreinigung zurückbleiben und müssen unter Umständen ausgewaschen werden (Dies geschieht z.B. durch Fortsetzen des Filtrationsprozesses, wobei das unmittelbar nach der Wiederaufnahme des Filtrationsprozesses gefilterte Fluid nicht verwendet kann, sondern entsorgt werden muß).

Die bekannten Verfahren zur Beseitigung des Filterkuchens (z.B. DE 39 24 658 A1) weisen die folgenden Nachteile auf. Zum einen erfordern sie eine erheblichen technischen Aufwand (Rechen- oder Rührwerke, Gaseinleitung, Vibrationseinrichtungen etc.) und machen das Verfahren störanfällig und kompliziert. Außerdem wird der wartungs- und Kostenaufwand erhöht.

Herkömmliche Reinigungsverfahren sind nicht immer vollkommen effektiv, d.h. sie reinigen die Anströmseite der bzw. die Filtermembran nicht vollständig.

Ein anderer Nachteil besteht darin, daß bei manchen Vorrichtungen nach dem Stand der Technik große Anlagen, Filterflächen usw. erforderlich sind, um einen ausreichenden Filtratdurchsatz zu erzielen.

Ein weiterer Nachteil dieser Reinigungsverfahren ist, daß für den Reinigungsvorgang der Filtrationsvorgang unterbrochen werden muß. Dies reduziert den Filterdurchsatz und erhöht die Kosten.

Zusätzlich ist bei diesen gängigen Verfahren von Nachteil der Energiebedarf und die damit verbundenen Kosten.

Zum weiteren Stand der Technik wird noch die DE 38 18 437 A1 genannt, die eine Filterbatterie mit Schikanenelementen zeigt, die für Turbulenzen sorgen. Die Batterie wird abwechselnd im Filtrier- und im Spülbetrieb betrieben.

Die DE 43 29 587 C1 zeigt eine Vorrichtung zum Filtrieren von Flüssigkeit mit einer selbstreinigenden Vorrichtung, bei der das Filter in die Wandung eines Rohres integriert ist und dem Rohr die zu filtrierende Flüssigkeit zugeleitet wird, die das Filter zu einem Teil passiert, um als Filtrat weitergeleitet zu werden und zum anderen Teil, angereichert mit Feststoffen, aus dem sich nach außen öffnenden Ende des Rohres nach außen tritt.

Die WO 97/32652 zeigt ein Filter, bei dem das zu filternde Medium ebenfalls starken Turbulenzen ausgesetzt wird, die beispielsweise durch einen Rotor, Schallwellen, elektrische Felder und ähnliches erzeugt werden.

Die DE 35 20 489 C1 zeigt ein Filter mit tangentialem Einlaß, bei dem die Flüssigkeit unter kontrollierter Verwirbelung dem Innenraum eines Behälters zugeleitet wird und ein Rührwerk über der Filtermembran ein sich ständig änderndes Druckwechselfeld erzeugt, um die Membran von Rückständen freizuhalten.

Die DE 14 36 287 A1 zeigt schließlich ebenfalls ein Tangentialfilter mit einer Spülung der Filterwand zum Lösen von Verunreinigungen.

Aufgabe der Erfindung ist es, die bekannte Filtervorrichtung dahingehend zu verbessern, daß auf der stromaufwärtigen Seite (Anströmseite) der Filtermembran die Ausbildung einer Deckschicht (Filterkuchen) aus durch die Filtermembran zurückgehaltenen Stoffen zumindest verlangsamt, wenn nicht gar vollständig verhindert wird.

Dies soll im wesentlichen dadurch erfolgen, daß die Anströmseite der Filtermembran selbsttätig gereinigt wird. Insbesondere soll die Filtermembran möglichst ohne äußeren Eingriff durch Personal, möglichst ohne Unterbrechung der Filtration, ohne Zusatzmedien (z.B. eingeleitete Gase) und möglichst kontinuierlich gereinigt werden. Vorzugsweise soll ein Austausch der Filteranordnung oder einer ihrer Komponenten vereinfacht und der Wartungsaufwand verringert werden. Schließlich soll die Standzeit der Filtermembran verlängert werden bei gleichzeitig reduzierten Kosten.

Diese Aufgabe wird durch die im Patentanspruch 1 angegebenen Merkmale gelöst. Vorteilhafte Ausgestaltungen und Weiterbildungen der Erfindung sind den Unteransprüchen zu entnehmen.

Das Grundprinzip der Erfindung besteht darin, einen Kreislauf, d.h. eine Querströmung zum Reinigen der Filtermembran und einen Rücklauf zu bilden, während die Hauptfiltrierrichtung senkrecht zur Membran liegt. Damit können zurückgehaltene Stoffe ständig und bei fortlaufender Filtration entnommen und entsorgt werden. Im Gegensatz zur eingangs genannten DE 72 25 662 Ul wird in erster Linie eine sog. "Dead-End-Filtration" durchgeführt, bei der die Hauptströmung senkrecht durch die Filtermembran läuft und die dem Fluid aufgeprägte Querstromkomponente vorrangig zur Entfernung zurückgehaltener Stoffe auf der Anströmseite der Filtermembran dient. Das die zurückgehaltenen Stoffe transportierende Fluid aus der Querstromkomponente wird über Entnahmestellen zu einem Rückführkanal geleitet und über diesen in den Zufuhrkanal zurückgeleitet. Im Bereich des Rückführkanales ist vorzugsweise ein Feststoffabscheider angeordnet, in welchem eine weitere Abreicherung von Feststoffen aus dem Fluid durchgeführt wird.

Die treibende Kraft für die Filtration wird von einer den Hauptstrom im Zufuhrkanal bewirkenden Einrichtung bewirkt, wie z.B. einer Hauptpumpe.

Die tangential gerichtete Querströmung wird durch die Geometrie der Filtermembran und des ihr zugeordneten Hauptkörpers erreicht. Die Rückströmung im Rückführkanal, die eine wesentliche Komponente entgegen der Hauptrichtung im Zufuhrkanal hat, wird vorzugsweise durch eine Strömungsverengung erreicht, die lokale Druckdifferenzen an der Rückleitungsstelle des Rückführkanales in den Zufuhrkanal bewirkt. Aufgrund verhältnismäßig kurzer Wegstrecken und eines geringen Druckabfalles längs dieser Wegstrecken wird auch nur eine verhältnismäßig geringe Druckdifferenz für die Rückführung des Fluids benötigt. Nach der Bernoulli-Gleichung:

$$p_{ges} = p + \frac{1}{2} \, \rho v^2 = \text{konst.}$$

(mit p = Druck; ρ = Dichte und v = Geschwindigkeit) und der Kontinuitätsgleichung:

$$A_1 \, v_1 = A_2 \, v_2$$

(A = Querschnittsfläche senkrecht zur Strömungsgeschwindigkeit)

wird der Zusammenhang zwischen Druck und Strömungsgeschwindigkeit bzw. Kanalquerschnitt und Strömungsgeschwindigkeit beschrieben. Gemäß diesen beiden Gleichungen ergibt sich, daß bei abnehmendem Querschnitt die Geschwindigkeit steigt und der Druck wiederum sinkt. Durch die Strömungsverengung im Zufuhrkanal an der Stelle, an der der Rückführkanal in den Zufuhrkanal mündet, kann somit eine Druckdifferenz zwischen dieser Stelle und der Oberfläche der Filtermembran geschaffen werden, die die Rückführung bewirkt oder zumindest unterstützt.

Wahlweise kann alternativ oder kumulativ auch eine Pumpe vorgesehen sein, die wirkungsmäßig im Rückführkanal angeordnet ist.

Das Ende des Rückführkanales ist vorzugsweise als Rohr ausgebildet, das in den Zufuhrkanal hineinragt und in Richtung auf die Filtermembran gebogen ist. In der Umgebung des Rohrendes ist der Querschnitt des Zufuhrkanales verengt, was durch einen geringeren Durchmesser oder in diesem Bereich eingesetzte "Schikanenelemente" erreicht wird. Hierbei handelt es sich beispielsweise um ein rotationssymmetrisches Einsatzstück, dessen Aufgabe darin besteht, unmittelbar nach dem Rohrende durch eine Verengung lokal eine Druckdifferenz auszubilden, die die Einleitung des rückgeführten Fluids in den Zufuhrkanal bewirkt. Dabei wird durch das in der Verengung schneller strömende Fluid eine Saugwirkung erzielt.

Bei der herkömmlichen Tangential- oder Querstromfiltration ist der Durchsatz pro Flächeneinheit des Filters und Zeiteinheit sehr gering. Dies erzwingt für höhere und damit wirtschaftlichere Durchsätze die Verwendung sehr großer Filterflächen. Die Trennung über den Filter findet dabei überwiegend mittels Diffusion durch den Filter statt.

Die Vorrichtung nach der Erfindung ist sehr kompakt und kommt mit relativ kleinen Filterflächen aus. Auch arbeitet die Filtervorrichtung nach der Erfindung mit einem hohen Durchsatz. Es wird nämlich nicht im sog. Cross-Flow-Verfahren sondern im sog. Dead-End-Verfahren (Anströmung der Membran parallel zur Normalen der Membran) auch bei hohen Drücken gearbeitet, was eine kompakte Auslegung der Filteranlage bei hohem Durchsatz gestattet. Der apparative Aufwand bei der Erfindung ist gering, da keine beweglichen Teile benötigt werden, was Kosten, Störanfälligkeit, Energie und Arbeitsaufwand (Wartung, Betrieb) stark vermindert.

Die bei einer bevorzugten Ausführungsform der Erfindung eingesetzten Schikanenelemente dienen vor allem dazu, über der gesamten Membranfläche die notwendige Querströmung zu erzeugen, so daß es im wesentlichen keine Membranbereiche gibt, die möglicherweise nicht freigeräumt werden. Die Turbulenz wird in erster Linie durch eine Kombination aus Geschwindigkeit und geringen Spaltabmessungen geschaffen, wobei die Schikanenelemente nur weiter zur Turbulenz beitragen. Des weiteren erlaubt es diese Geometrie, bei hohen Arbeitsdrücken und damit hohen Durchsätzen zu arbeiten. Durch diese Ausgestaltung werden ohne zusätzliche Mittel, wie z.B. Pumpen, Düsen, Rührwerke etc. und damit ohne zusätzlichen Energiebedarf sehr hohe Quergeschwindigkeiten erreicht, die eine ausgezeichnete Transportwirkung sowie Turbulenzerzeugung gewährleisten. Auch ist der nach der Erfindung vorgeschlagene Aufbau mit austauschbaren Schikanenelementen an verschiedene Prozeßanforderungen leicht anzupassen.

Durch die Einbeziehung elektrischer Felder werden die beabsichtigten Reinigungseffekte noch verstärkt.

Die Ausgestaltung der Filteranordnung nach der Erfindung schafft zusätzlich zur Reinigung der Filtermembran und Entsorgung der abgetrennten Stoffe auch eine gewisse Sicherung der Membran gegen Druckstöße.

Im folgenden wird die Erfindung anhand von Ausführungsbeispielen im Zusammenhang mit der Zeichnung ausführlicher erläutert. Es zeigt:

| | |
|---|---|
| Fig. 1 | eine Filtervorrichtung nach der Erfindung in zwei Ausführungsbeispielen, die in der linken und der rechten Hälfte der Fig. 1 abgebildet sind; |
| Fig. 2a bis 2d | verschiedene Untervarianten der Rückführung und der Abfuhr von Feststoffen; |
| Fig. 3a und 3b | eine Modifikation des Schikanenelementes bzw. des Hauptkörpers; |
| Fig. 4 | eine Ausführungsform zur Darstellung der Montage von Schikanenelementen in der Filtervorrichtung nach der Erfindung; und |
| Fig. 5 | eine alternative Ausführungsform der Montage eines Schikanenelementes bei der Filtervorrichtung nach der Erfindung. |

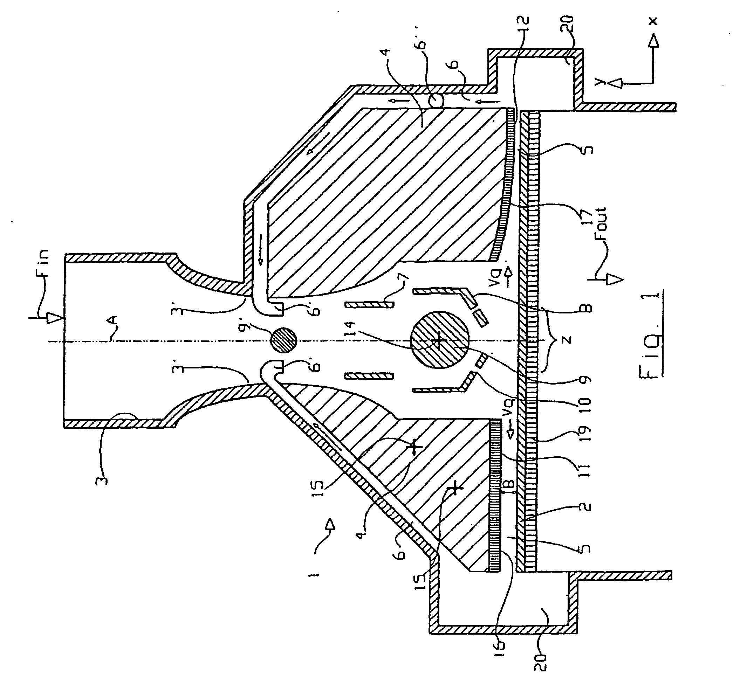

Fig. 1 zeigt einige Varianten von Filtervorrichtungen nach der Erfindung. Die Filtervorrichtung 1 hat eine Filtermembran 2, der über einen Zufuhrkanal 3, der senkrecht zur Oberfläche des Filtermembran 2 steht, ein zu filterndes Fluid zugeführt wird. Das Fluid ist normalerweise eine mit Feststoffen verunreinigte Flüssigkeit. Es kann aber auch ein mit Feststoffen verunreinigtes Gas sein. In Strömungsrichtung (vgl. Pfeil $F_{in}$) vor der Filtermembran 2 ist ein Hauptkörper 4 angeordnet, der einerseits den Zufuhrkanal 3 fortführt und damit auch bildet und im wesentlichen parallel zur Filtermembran 2 eine seitlich sich über den Zufuhrkanal 3 hinaus erstreckende Kontur hat, die in geringem Abstand B zur Filtermembran läuft und damit einen Spalt 5 bildet. Dieser Spalt hat im linken Teil der Fig. 1 eine konstante Breite B. Bei der im rechten Teil der Fig. 1 dargestellten Variante verkleinert sich der Spalt von der Mitte, d.h. dem Zufuhrkanal 3, her zur Außenseite, wodurch eine Düsenwirkung entsteht.

Im Bereich des Querschnittes des Zufuhrkanals 3 gelangt das Fluid im wesentlichen mit einer senkrecht zur Oberfläche der Filtermembran 2 verlaufenden Geschwindigkeitskomponente auf diese. Ein wesentlicher Teil der Strömung wird dann durch den Spalt 5, der als Querkanal dient, parallel zur Oberfläche der Filtermembran 2 geleitet, wie durch die Pfeile $v_q$ (für Quergeschwindigkeit) dargestellt ist. Der Querkanal 5 geht dann in einen Rückführkanal 6 über, der das aus dem Spalt 5 austretende Fluid zurück in den Zufuhrkanal 3 leitet. Das in den Zufuhrkanal 3 mündende Ende des Rückführkanals 6 ist als Rohrende 6' ausgeführt, das in Richtung zur Filtermembran 2 hin abgebogen ist, so daß das rückgeführte Fluid parallel zur Hauptströmung (vgl. Pfeil $F_{in}$) wieder in den Zufuhrkanal gelangt. Im Ausführungsbeispiel der Fig. 1 hat der Zufuhrkanal 3 eine Verengung 3', wobei die engste Stelle vorzugsweise im Bereich des Austritts der Rohrenden 6' des Rückführkanals 6 liegt. Durch diese Verengung tritt - wie eingangs beschrieben - in diesem Bereich eine höhere Strömungsgeschwindigkeit auf und damit eine Druckabsenkung, so daß der Druck am Austrittsende des Rückführkanals kleiner ist als an der Oberfläche der Filtermembran bzw. dem Eintritt des Rückführkanals 6. Zusätzlich bewirken auch die in den Zufuhrkanal 3 hineinragenden Rohrenden 6' eine Querschnittsverengung, was den beschriebenen Effekt unterstützt.

Alternativ oder kumulativ zu der Querschnittsverengung 3' können im Bereich der Austrittsöffnung des Rückführkanals 6 auch Einsatzstücke angeordnet sein, die beispielsweise die Form eine sphärischen Körpers 9' haben, der ebenfalls als Strömungsverengung dient.

Alternativ oder kumulativ kann wirkungsmäßig im Rückführkanal 6 auch eine Pumpe 6" angeordnet sein, die die Rückförderung bewirkt.

Im Zufuhrkanal 3 sind mehrere hier röhrenförmige, rotationssymmetrische Schikanenelemente 7 und 8 angeordnet sowie ein sphärisches Schikanenelement 9. Die gesamte Vorrichtung 1 einschließlich Hauptkörper, Schikanenelemente etc. ist hier rotationssymmetrisch zur Achse A. Im Ausführungsbeispiel der Fig. 1 ist das Schikanenelement 7 rein zylindrisch und das Schikanenelement 8 in etwa trichterförmig mit Perforationen 10, die für eine stärkere Verwirbelung sorgen. Auch diese Perforationen können rotationssymmetrisch zur Achse A liegen.

Bezogen auf ein in der rechten unteren Ecke der Fig. 1 dargestelltes kartesisches Koordinatensystem mit den beiden Achsen x und y, strömt das Fluid in Richtung des Pfeiles $F_{in}$ in Richtung der negativen y-Achse parallel zur Symmetrieachse A entlang den Schikanenelementen 7, 9 und durch das perforierte Schikanenelement 8 in Richtung auf die Anströmseite der Filtermembran 2. Dabei wird auf der Anströmseite der Membran 2, insbesondere aber nicht ausschließlich in deren Mitte eine turbulente Strömung erzeugt, die eine Anlagerung von durch die Membran 2 zurückgehaltenen Stoffen auf der Anströmseite zumindest verlangsamt. Außerdem wird parallel zur Membran 2 im Spalt 5 eine Strömung mit hoher Querstromgeschwindigkeit ($v_q$) erzeugt, welche die zurückgehaltenen Stoffe entlang der Anströmseite der Membran (parallel zur x-Richtung) transportiert. Die Querströmung im Spalt 5 ist vorzugsweise turbulent, wodurch eventuell auf der Membran 2 befindliche Stoffe von ihr "aufgewirbelt" und mit der Querströmung abtransportiert werden.

Die zurückgehaltenen Stoffe werden aus der Querströmung entnommen bzw. von ihr abgetrennt und die von den zurückgehaltenen Stoffen im wesentlichen befreite Querströmung wird durch den Rückführkanal 6 auf die Einströmseite in den Hauptstrom, d.h. dem Zufuhrkanal 3 zurückgeleitet. Auf diese Weise erfolgt eine Reinigung der Membran 2 ohne Unterbrechung des Filtrationsvorganges.

In der rechten und der linken Hälfte der Fig. 1 sind verschiedene Varianten für die Ausbildung des Rückführkanales dargestellt. Im linken Teil verläuft er geradlinig schräg nach oben, im rechten Teil zunächst senkrecht nach oben und dann über einen abgeknickten, einen horizontalen sowie einen nach unten abgeknickten Abschnitt zurück in den Zufuhrkanal 3. Andere Formen sind selbstverständlich ebenfalls möglich.

Falls die Wegstrecke von der Mitte der Membran 2 zu ihrem Rand nicht zu lang ist, ist der Druckabfall entlang der Wegstrecke relativ gering und eine ausreichende Transportwirkung gewährleistet, wie durch das Gesetz von Hagen-Poiseuille (G-HP) in Näherung beschrieben wird:

$$\Delta p = \frac{dV}{dt} \cdot R = \frac{8 \eta L}{\pi r^4} \frac{dV}{dt}$$

wobei L= Länge einer Röhre, r= Radius der Röhre und entspricht ungefähr B.

Den Strömungszustand eines Fluids beschreibt man mit Hilfe der Reynolds-Zahl Re, die in folgender Gleichung (1) angegeben ist:

$$(1) \qquad Re = 2\, r\, \rho\, v / \eta$$

Dabei ist r (m) der Radius der Querschnittfläche, durch die das Fluid strömt, $\rho$ die (von der Fluidtemperatur abhängige) Dichte des Fluids, v (m/s) die Strömungsgeschwindigkeit sowie $\eta$ (Pa s) die Viskosität des Fluids. Die entsprechenden Werte für Wasser lauten beispielsweise: $\eta = 1,8 \times 10^{-3}$ Pa s (bei 0°C) bzw. $1,0 \times 10^{-3}$ Pa s bei 20°C; $\rho = 1000$ kg/m$^3$. Für Werte von Re < ca. 2000 ist die Strömung laminar, während sie für Werte von Re > ca. 3000 turbulent ist (im Bereich 2000 < Re < 3000 ist der Strömungszustand instabil und wechselt von einem Typ in den anderen).

Nach Gleichung (1) kann durch geeignete Wahl der Parameter r, v (und u.U. auch der Temperatur T und damit der Viskosität des Fluids) die Strömung des Fluids wahlweise in eine turbulente und/oder laminare Strömung übergeführt werden. Dieser Umstand wird für die vorliegende Erfindung genutzt. Ändern sich die entsprechenden Parameter über eine Kanalstrecke, so ändert sich auch entsprechend der Strömungszustand.

Als Beispiel wird die Filtervorrichtung nach Fig. 1 betrachtet, die z.B. folgende Parameterwerte (in SI-Einheiten) aufweist: $\rho$= 1000 kg/m$^3$ , $\eta$= 1,8 $\times$ 10$^{-3}$ Pa s, r= 0,5 $\times$ 10$^{-3}$ m (0,5 mm) = B/2; v= 10 m/s (Druckdifferenz 1 Bar): Mit diesen Werten ergibt sich für den Spaltbereich 5 zwischen der Unterseite 12, 16 und der Membran 2 ein Re $\approx$ 5500; also turbulente Strömung mit sehr hoher Strömungsgeschwindigkeit v.

Variiert man die Parameter (insbesondere r bzw. B) über den Fluidweg, können Zonen mit turbulenter und laminarer Strömung geschaffen und der Druckabfall entlang der stromaufwärtigen Seite der Membran 2 eingestellt werden. Natürlich gilt dies auch für jeden anderen Bereich im Fluidstrom, insbesondere auch im Bereich der Schikanenelemente 7, 8 und 9. Durch die geeignete Parametrisierung und Formgebung der Schikanenelemente wird im Bereich z der Oberfläche der Membran 2 eine turbulente Strömung mit starker Querkomponente geschaffen.

Im rechten Teil der Fig. 1 ist eine zweite Ausführungsform der Filtervorrichtung gemäß der vorliegenden Erfindung gezeigt. Diese Ausführungsform ist der dem linken Teil der Fig. 1 gezeigten ähnlich, wobei aber die Unterseite 12 des Hauptkörpers 4 nicht mehr, wie die Unterseite 11 im linken Teil der Fig. 1 parallel zur Membran 2 verläuft, sondern einen sich in Richtung des Randes der Membran 2 hin verengenden Spalt 5 bildet. Insbesondere kann die Kontur gemäß der Gleichung Hagen-Poiseuille so festgelegt werden, daß das Verhältnis dV/dt $\times$ L/r$^4$ bzw. dV/dt $\times$ L/B$^4$ einen konstanten Wert hat. Gemäß der Gleichung Hagen-Poiseuille führt dies zu einem konstanten Druckabfall ($\Delta$p) über die Länge L auf der Anströmseite der Membran 2. Je nach Wahl der Parameter (z.B. dV/dt, L, r bzw. B sowie $\eta$) kann somit der für den Abtransport zurückgehaltener Stoffe erforderliche Druckabfall nach Wunsch festgelegt werden. Dieses Merkmal erhöht die Transporteffizienz und erlaubt eine Reduzierung des Druckes auf der Anströmseite der Membran 2 (Reduzierung des Energiebedarfs, kleinere Pumpen und geringere Pumpleistung notwendig). In dieser Ausführungsform der Filtervorrichtung 1 sind kein zusätzlicher Energieaufwand und kein zusätzliches Medium (z.B. Gase o.ä.) nötig, um die Membran 2 zu reinigen. Sie wird vielmehr selbsttätig gereinigt.

Gemäß einer Weiterbildung der Erfindung kann zusätzlich mindestens eine Elektrode 14 vorgesehen sein. Im linken Teil der Fig. 1 sind als ein Beispiel eine Hauptelektrode 14 in der sphärischen Schikane und zwei sekundäre Elektroden 15 im Hauptkörper 4 dargestellt. Die Anzahl der Elektroden kann natürlich verschieden sein sowie auch ihre Anordnung. Auch ist es beispielsweise möglich, Elektroden 11, 17 am Hauptkörper 4 anzubringen und zwar beispielsweise direkt an dessen Unterseite 16 bzw. 12. Die Elektroden können dabei auch so angeordnet sein, daß sie die Funktion von Schikanen im Spalt 5 erfüllen. In diesem Falle sollten sie zu ihrem Schutz vor einer Einwirkung durch das Fluid ummantelt sein. Mit Hilfe der Elektroden können im Fluid und insbesondere in der Umgebung der Filtermembran 2 elektrische Felder erzeugt werden und vorzugsweise gepulste elektrische Felder, was beim Loslösen von zurückgehaltenen Stoffen auf der Membran 2 unterstützend wirkt. Schließlich kann auch auf der stromabwärtigen oder der stromaufwärtigen Seite der Membran 2 eine weitere Elektrode 19 vorgesehen sein, die natürlich grobmaschiger als die Membran ist und auf die Feststoffpartikel eine abstoßende Wirkung hat.

Die Elektroden ragen teilweise in den Fluidstrom, d.h. insbesondere in den Spalt 5, sowie vom sphärischen Schikanenelement 9 in Richtung auf die Membran 2 und sind z.B. als Anode geschaltet. Auf der Anströmseite der Membran sind elektrische Leiter aufgebracht, die als Kathode geschaltet sind. Wird über Kathode und Anode ein Stromimpuls durch das Fluid geschickt, werden, z.B. durch elektrolytische Zerlegung von Wasser, Gasbläschen erzeugt, die eine eventuelle Ablagerungsschicht auf der Anströmseite der Membran aufbrechen oder zerlegen und deren Ablösung von der Membran zumindest erleichtern. Dabei werden auch äußerst reaktive freie Radikale erzeugt, die die Bildung von Biofilmen zumindest erschweren, wenn nicht gerade verhindern.

Die Werte der Stromimpulse liegen beispielsweise im Bereich von wenigen 10 mA/cm$^2$ bis einige 100 mA/cm$^2$. Die Anzahl der Stromimpulse pro Stunde kann je nach Verlauf des eventuellen Foulings, der Zusammensetzung des Unfiltrats, der Membranwerte zwischen 2 bis 12 oder mehr pro Stunde liegen. Die Dauer der Stromimpulse liegt im Bereich von wenigen Sekunden (1 - 5 s) bis ca. einigen 10 Sekunden.

Die Zahl der Elektroden, die der Membranfläche zugeordnet sind (Zahl der Elektroden/Membranfläche) kann natürlich nach Bedarf gewählt werden. In einer Ausführungsform sind acht Elektroden im Hauptkörper sowie eine Elektrode im sphärischen Schikanenelement vorgesehen. Die Elektroden können darüber hinaus auch durch eine das elektrische Feld nicht beeinflussende Ummantelung gegen das Fluid geschützt sein. Dieses zusätzliche Merkmal kann eine Ausbildung einer Fouling-Schicht weiter erschweren oder ganz verhindern. Dadurch kann der Durchsatz durch die Membran 2 deutlich erhöht werden. Dies wiederum erlaubt eine Reduzierung der Filterfläche bei gleichem Durchsatz oder fordert einen geringeren Druck (Pumpleistung, Energieverbrauch) bzw. geringere Fluidgeschwindigkeiten bei gleichem Durchsatz. Die Effekte für die Filtrationskosten sind daher offenkundig.

Fig. 1 ist weiter zu entnehmen, daß am radialen Ende des Spaltes 5 und in dem Übergangsbereich zu dem Rückführkanal 2 eine Entnahmevorrichtung 20 angebracht ist, durch die zum Rand der Membran transportierte Stoffe abgeschieden werden und nicht mehr in den Rückführkanal gelangen. Im einfachsten Fall ist diese Entnahmevorrichtung 20 ein ringförmiger Behälter. Dieser Behälter kann rotationssymmetrisch zur Achse A ausgebildet sein, in den die Querströmung des Fluids hineingelangt. Sofern die herausgefilterten Verunreinigungen schwerer als die Flüssigkeit sind, können diese sich absetzen und werden in der Entnahmevorrichtung 20 "gesammelt". Von dort können sie intermittierend entfernt werden, ohne daß der Filtrationsbetrieb dadurch unterbrochen werden muß.

Fig. 2A zeigt eine Ausführungsform einer Entnahmevorrichtung 20, die am Hauptkörper 4 befestigt ist. Sie ist ein Sammelbehälter, der an einer mit dem Hauptkörper 4 verbundenen Seite ein herkömmliches kostengünstiges Filterelement 22 (z.B. aus Zellulose, Metall oder ähnlichem) mit vorzugsweise größeren nominellen Porendurchmessern als die Membran 2 aufweist. Die Entnahmevorrichtung 20 ist z.B. über einen einfachen Verrastmechanismus 23 an einem Ansatz oder Flansch 24 des Hauptkörpers 4 dicht befestigt. Zwischen dem Verrastmechanismus 23 und dem Rand der Membran 2 ist ein Ventil 24 vorgesehen, das beispielsweise ein einfaches Drehschieberventil bekannter Bauart sein kann. Bei der Montage bzw. dem Austausch der Entnahmevorrichtung 20 wird bei laufendem Filtrationsbetrieb das Ventil 24 kurzzeitig geschlossen, um ohne Unterbrechung des Filtrationsbetriebes den Umbau vornehmen zu können.

Im folgenden wird die Funktion der Entnahmevorrichtung 20 erläutert. Während des Filtrationsvorganges werden die von der Membran 2 zurückgehaltenen Stoffe entlang der stromaufwärtigen Seite der Membran 2 zu deren Rand in Richtung auf die Entnahmevorrichtung 20 transportiert. Aufgrund der größeren Porenweite des herkömmlichen Filterelementes 22 können die zurückgehaltenen Stoffe durch das Filterelement 22 in den Sammelbehälter 20 gelangen. Wegen der "Totzonenwirkung" des Sammelbehälters 20 ist die Wahrscheinlichkeit für eine Rückkehr der im Sammelbehälter akkumulierten Stoffe durch das Filterelement 22 relativ gering. Der gesamte Raum (Sammelbehälter 20, Spalt 5 und Rückführkanal 6") ist mit Fluid gefüllt. Auf diese Weise findet bei der Entnahmevorrichtung 20 eine Art Filtration statt, bei der die Entnahme der zurückzuhaltenden Stoffe durch die geeignete Kombination von Stromführung (inkl. Totzone = Sammelbehälter 20 und Rückleitungskanal 6), Querströmung und Filtration mit der Membran 2 erreicht wird.

Um die Rückleitung des Fluids in den Hauptstrom $F_{in}$ zu unterstützen, kann der Rückleitungskanal 6 z.B. mit nicht konstantem, d.h. sich änderndem, Durchmesser ausgebildet werden. Insbesondere kann beispielsweise der Durchmesser des Rückleitungskanals 6 vom Ventil 24 bis zum Einleitungspunkt in den Hauptstrom abnehmen, wodurch sich die Strömungsgeschwindigkeit erhöht und der Druck entlang dem Rückleitungskanal abnimmt. Dies schafft ein gewisses Druckgefälle, das zusätzlich zur Strömungsverengung 3' (bzw. 9' in Fig. 1) die Rückleitung zusätzlich "treibt".

Über den im Hauptkörper 4 ausgebildeten Rückleitungskanal 6 gelangt das von den zurückgehaltenen Stoffen wenigstens teilweise, vorzugsweise aber weitgehend befreite Fluid zurück in den Hauptstrom $F_{in}$ und mit diesem wieder zur Membran 2. Damit ist der Reinigungskreislauf geschlossen. Betrachtet man ein Volumenelement im Fluidstrom, so werden z.B. in einem ersten Durchgang des Reinigungskreislaufes stoffe an der Membran 2 zurückgehalten, mit Hilfe der Querströmung zur Entnahmevorrichtung 20 transportiert und dort zu einem gewissen Teil deponiert, und das Fluid wird mit im wesentlichen reduziertem Anteil an zurückzuhaltenden Stoffen schließlich in den Hauptstrom zurückgeleitet. Ist der restliche Anteil an zurückzuhaltenden Stoffen im betrachteten Volumenelement noch zu hoch, wiederholt sich der Filtrationsvorgang an der Membran 2. Es stellt sich eine Art dynamisches Gleichgewicht ein, bei dem gleichzeitig und kontinuierlich die Membran 2 die gewünschte Filtration durchführt, die Membran 2 selbsttätig gereinigt wird und die zurückzuhaltenden Stoffe dem Fluidstrom entzogen werden.

Die Entnahmevorrichtung 20 kann aus Edelstahl, Kunststoff oder anderen jeweils branchen- oder anwendungsüblichen Materialien geschaffen sein.

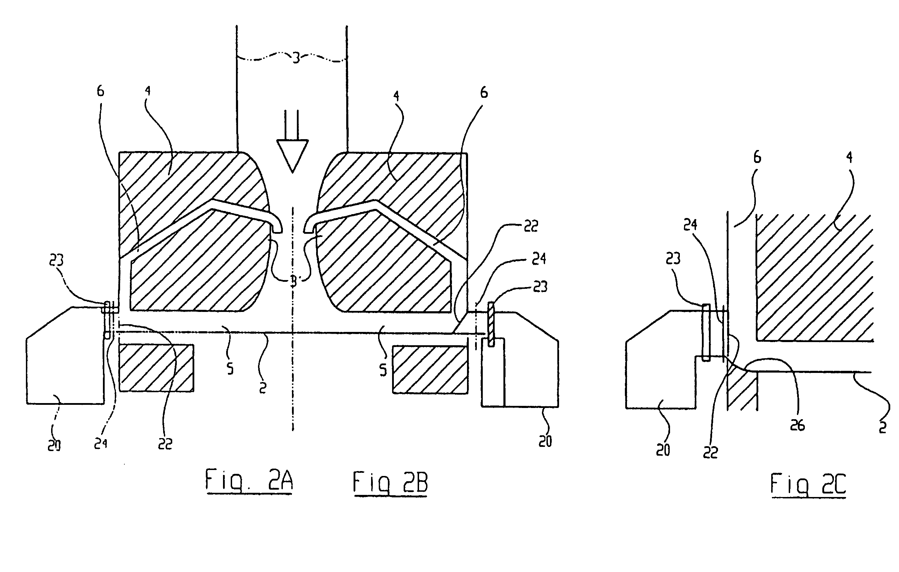

In anderen Ausführungsformen können die Kanäle und/oder die Stromführung nach Bedarf variiert werden. So kann das Filterelement 22 unter einem von 90° verschiedenen Winkel gegen die Querströmung ($v_q$) aus dem Spalt 5 angeordnet werden (vgl. Fig. 2B). Darüber hinaus kann die Eintrittsöffnung in den Sammelbehälter 20 an dessen oberen Ende liegen, so daß ein in ihn gelangter Stoff sich noch besser an seinem Boden absetzen und kaum oder vorzugsweise überhaupt nicht mehr in den Rückleitungskanal 6 zurückkehren kann. Außerdem sind weitere Anströmgeometrien vorstellbar, wie sie in Fig. 2C skizziert sind. Durch entsprechende Umlenkung 26 des Spaltes 5 zum Rückführkanal 6 kann die Strömung in den Sammelbehälter 20 geführt werden.

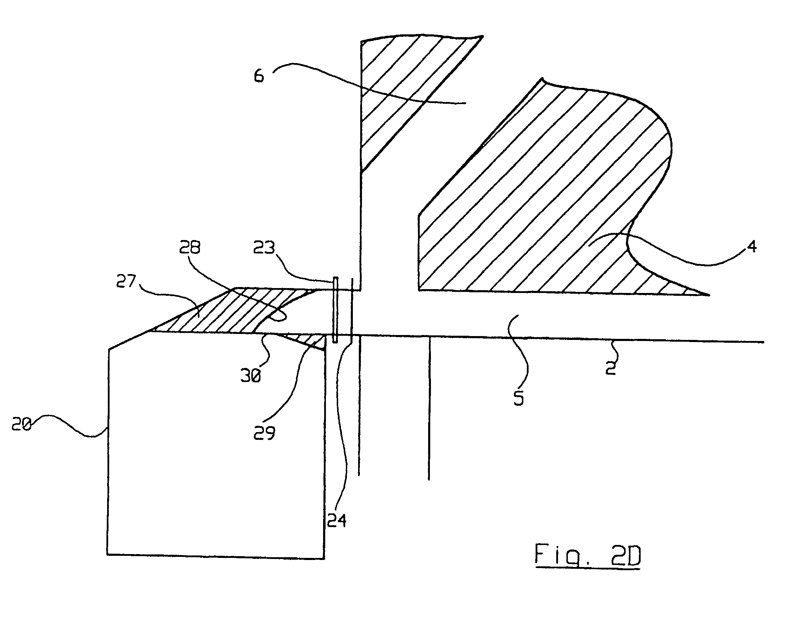

Ist die Einströmöffnung in den Sammelbehälter 20 vergleichsweise klein ausgebildet, kann ggf. auf ein Filterelement 22 vollständig verzichtet werden. Das Filterelement 22 hat hauptsächlich die Aufgabe, einen Rückstrom der von der Membran 2 vorher zurückgehaltenen und in den Sammelbehälter 20 gelangten Stoffen in den Rückleitungsstrom und den Rückleitungskanal 6 zu unterbinden oder zumindest zu erschweren. Die Wahrscheinlichkeit, daß Teilchen in den Rückleitungsstrom und damit in den Rückleitungskanal 6 zurückgelangen, kann auch durch bauliche Vorkehrungen reduziert werden. Ein Beispiel hierfür ist in Fig. 2D skizziert. Mit entsprechenden Leitkörpern 27 und einer konkav gewölbten, zum Spalt 5 hin geneigten Anströmkante 28 sowie einem weiteren Leitblech 29, das zur Anströmkante 28 nur noch einen geringen Spalt 30 offenläßt, läßt sich dies erreichen. Diese Öffnungsgeometrie kann in die Entnahmevorrichtung 20 integriert werden, so daß an den Anschlüssen und der Verrohrung der Entnahmevorrichtung 20 Standardelemente genutzt werden können. Die in der Entnahmevorrichtung 20 enthaltenen Schikanenelemente 27 und 29 verengen den Eintrittskanal in den Sammelbehälter 20 vom Anschluß 23 auf eine deutlich kleinere Öffnung 30. Die Wahrscheinlichkeit für einen Rückstrom der einmal in den Sammelbehälter 20 gelangten Stoffe durch die Öffnung 30 ist in Näherung proportional dem Verhältnis der Fläche der Öffnung 30 zur Fläche der gesamten Innenwand des Sammelbehälters 20. Man beachte, daß im "eingefahrenen Zustand" der gesamte Raum (20, 5, 6) mit Fluid gefüllt ist und die Entnahme auf einer "Anreicherung bzw. Aufkonzentrierung" der zurückzuhaltenden Stoffe im Sammelbehälter 20 beruht. Dabei wird die Trägheit dieser Stoffe bei deren Transport in die Entnahmevorrichtung 20 ausgenutzt.

Die Befestigungsmechanismen des Sammelbehälters 20 können ebenfalls abgewandelt werden. Gewinde- und/oder Klemmverbindungen sind verwendbar, solange natürlich die Dichtigkeit der Verbindung gewährleistet ist.

Bei einer Filtervorrichtung gemäß der vorliegenden Erfindung werden vorzugsweise mehr als eine Entnahmevorrichtung 20, nämlich mindestens zwei oder mehr Entnahmevorrichtungen verwendet. Im Falle von vier Entnahmevorrichtungen sind diese an vier Seiten symmetrisch angeordnet. Die Nutzung von mehr als einer Entnahmevorrichtung stellt auch sicher, daß bei Wartungsarbeiten (wie Austausch etc.) der Entnahmeprozeß und damit die Filtration an der Membran 2 sowie deren Reinigung weitergeht.

Das Funktionsprinzip der in dieser Anmeldung beschriebenen Entnahmevorrichtung stellt eine Art zusätzlicher Filtration dar, die auch bei Bedarf als eigenständiges und/oder alleiniges Filtrationsprinzip genutzt werden kann. Beispielsweise kann bei geeigneter Auslegung (Skalierung, Kanalführung etc.) in einem Kreislauf des Fluidstroms die Massenträgheit von Stoffen im Fluid, die dem Fluid entzogen werden sollen, genutzt werden, um diese Stoffe in "Totzonen" zu sammeln. Dabei muss an der Stelle, an der der Kreislauf beginnt, ein erhöhter Strömungswiderstand im Ausflußkanal für das abgereicherte Fluid eingerichtet werden (z.B. mittels Membranen, Schikanenelemente, eines nicht konstanten Kanaldurchmessers etc.) und ggf. kann die Entnahmevorrichtung auch als Zentrifugenfilter ausgebildet sein.

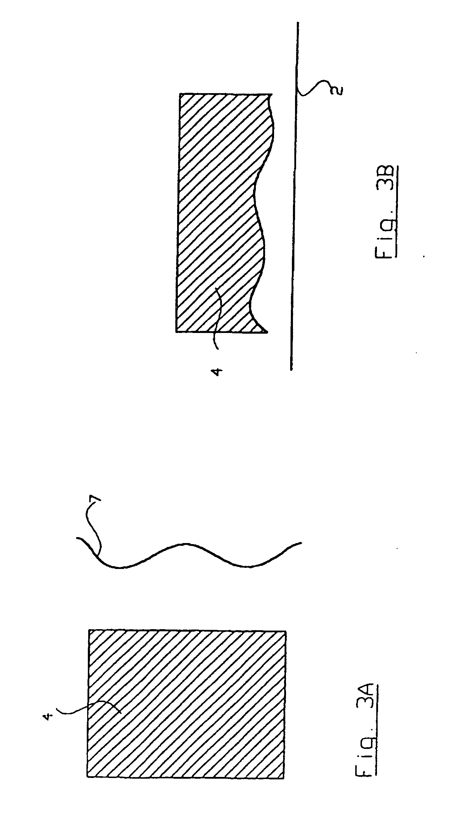

Fig. 3 zeigt, daß die einzelnen Elemente auch gewellte, d.h. nicht-planare Oberflächen aufweisen. In Fig. 3A ist das Schikanenelement 7 gewellt bzw. gerippt ausgebildet, während der Hauptkörper 4 noch eine glatte Wand hat. Selbstverständlich kann auch der Hauptkörper 4 gewellt sein. In Fig. 3B ist die Unterseite 12 des Hauptkörpers gewellt. An Bereichen mit größeren Abständen zum jeweils benachbarten Element können dabei gezielt Zonen mit turbulenter Strömung ausgebildet werden. Selbstverständlich kann auch die Membran 2 gewellt sein.

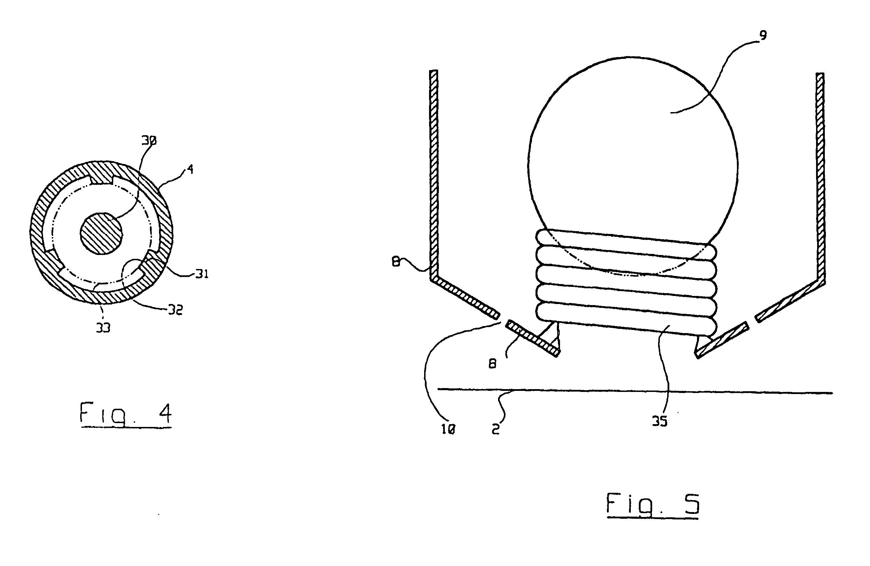

Fig. 4 zeigt, wie ein Schikanenelement schalenartig in den Hauptkörper 4 eingebaut ist. Der Hauptkörper 4 weist mindestens zwei, hier drei in den Zufuhrkanal 3 hineinragende Teile 31 eines Innengewindes auf, wobei die radial nach innen weisenden Flächen 32 das Innengewinde bilden. Ein rotationssymmetrisches Schikanenelement 33 verfügt seinerseits über ein entsprechendes Außengewinde und ist mit dem Innengewinde 32 verschraubt. Weitere Schikanenelemente, wie z.B. das Schikanenelement 30, sind ebenfalls mit korrespondierenden Gewinden versehen. Diese schalenartige Struktur kann je nach Anwendung beliebig erweitert werden.

Statt die Schikanenelemente wechselseitig zu verschrauben, können sie natürlich auch mit anderen Befestigungsvorrichtungen verwendet werden. Beispielsweise können sie über Stifte und entsprechend ausgebildete Nuten in den korrespondierenden Teilen (Hauptkörper und Schikanenelement) einfach eingesetzt und verrastet werden. Die beiden erwähnten Mechanismen zum Einbau der Schikanenelemente schaffen eine hohe Flexibilität bei Wartung und Austausch. Insbesondere können die Schikanenelemente und natürlich auch - falls benötigt - der Hauptkörper je nach Verfahrensbedingungen, verwendetem Fluid usw. gegen andere Komponenten ausgetauscht werden. Das sphärische Schikanenelement 30 wird mit Hilfe von Vorsprüngen beispielsweise am Schikanenelement 33 verrastet.

In einer weiteren Ausführungsform der Erfindung, die in Fig. 5 dargestellt ist, wird das sphärische Schikanenelement 9 auf einer Feder 35 gelagert, die ihrerseits am Schikanenelement 8 befestigt ist. Durch die Federkonstante der Feder 35 läßt sich auch eine Durchflußregulierung realisieren. Tritt im einströmenden Fluid ein Druckstoß auf, so wird das sphärische Schikanenelement 9 gegen die Kraft der Feder 35 in Richtung auf die Membran 2 verschoben, wodurch der Durchflußkanal zwischen dem sphärischen Schikanenelement 9 und dem Schikanenelement 8 verengt wird. Auf diese Weise wird eine im wesentlichen gleichmäßige Fluidzufuhr zur Membran 2 realisiert. Außerdem wird die Membran gegen Druckstöße geschützt, die sie beschädigen und somit auch zu einer Unterbrechung der Filtration führen könnten.

Die oben beschriebene Filtervorrichtung kann in ihren einzelnen Bestandteilen beliebig dimensioniert werden, um sie an die jeweiligen Anwendungszwecke anzupassen. Das Prinzip der Erfindung ist durchaus auch auf großtechnische Anwendungen, wie z.B. Abwasserreinigung anwendbar.

Die Filtervorrichtung mit dem Hauptkörper und den Schikanenelementen kann auch in ein Gehäuse aus Edelstahl oder anderen Materialien eingebaut werden. Dieses Gehäuse kann über standardmäßige Anschlüsse in übliche Rohrleitungen eingesetzt werden.

**Patentansprüche**

1. Filtervorrichtung zur Filterung von Fluiden mit einer Filtermembran (2) und einer Einrichtung zur Erzeugung einer tangential zur Fläche der Filtermembran gerichteten Querströmung, mit einem stromaufwärts der Filtermembran angeordneten Hauptkörper (4), der einen senkrecht zur Oberfläche der Filtermembran verlaufenden Zufuhrkanal (3), einen zwischen sich und der Filtermembran verlaufenden Spalt (5) zur Bildung der tangential gerichteten Querströmung und einen Rückführkanal (6) aufweist, **dadurch gekennzeichnet,** **daß** der Rückführkanal (6) in Strömungsverbindung mit dem Zufuhrkanal (3) steht und daß zur Rückförderung des Fluids eine stromaufwärts der Filtermembran (2) angeordnete Strömungsverengung (3') vorgesehen ist.

2. Filtervorrichtung nach Anspruch 1, **dadurch gekennzeichnet,** **daß** die Strömungsverengung (3') durch mindestens einen in den Zufuhrkanal (3) hineinragenden Rohrstutzen (6') gebildet ist, dessen Auslaß das rückgeförderte Fluid parallel zur Längsachse des Zufuhrkanals (3) in den Zufuhrkanal leitet.

3. Filtervorrichtung nach einem der Ansprüche 1 oder 2, **dadurch gekennzeichnet,** **daß** zusätzlich im Rückführkanal (6) eine zwischengeschaltete Pumpe (6") angeordnet ist.

4. Filtervorrichtung nach einem der Ansprüche 1 bis 3, **dadurch gekennzeichnet,** **daß** im Rückführkanal (6) ein Feststoffabscheider (20) angeordnet ist.

5. Filtervorrichtung nach einem der Ansprüche 1 bis 4, **dadurch gekennzeichnet,** **daß** stromaufwärts der Filtemembran (2) mindestens ein Schikanenelement (7, 8, 9) angeordnet ist, das die Strömung verwirbelt.

6. Filtervorrichtung nach Anspruch 5, **dadurch gekennzeichnet,** **daß** zumindest eines der Schikanenelemente (8) ein oder mehrere Löcher (10) aufweist.

7. Filtervorrichtung nach Anspruch 5 oder 6, **dadurch gekennzeichnet,** **daß** die Schikanenelemente (7, 8, 9) ineinander gefügt und miteinander verbunden sind, vorzugsweise über Gewindeteile oder Stifte.

8. Filtervorrichtung nach einem der Ansprüche 1 bis 7, **dadurch gekennzeichnet,** **daß** zumindest im Hauptkörper (4) eine Elektrode (15) angeordnet ist, durch die im Fluid ein elektrisches Feld erzeugt wird.

9. Filtervorrichtung nach Anspruch 8, **dadurch gekennzeichnet,** **daß** zumindest eines der Schikanenelemente eine Elektrode (14) aufweist.

10. Filtervorrichtung nach Anspruch 8 oder 9, **dadurch gekennzeichnet,** **daß** die Elektroden ein elektrisches Wechselfeld erzeugen.

11. Filtervorrichtung nach einem der Ansprüche 1 bis 10, **dadurch gekennzeichnet,** **daß** der Spalt (5) zwischen der Unterseite (12) des Hauptkörpers (4) und der Filtermembran (2) eine radial nach außen zunehmende Breite (B) hat.

12. Filtervorrichtung nach einem der Ansprüche 5 bis 11, **dadurch gekennzeichnet,** **daß** zumindest ein Schikanenelement (9) beweglich gelagert ist, vorzugsweise mittels einer Feder (35).

13. Filtervorrichtung nach einem der Ansprüche 1 bis 12, **dadurch gekennzeichnet,** **daß** zwischen dem Spalt (5) und dem Feststoffabscheider (20) ein weiteres Filterelement (22) angeordnet ist sowie eine Ventileinrichtung zum Absperren des Zulaufes zu dem Feststoffabscheider.

14. Filtervorrichtung nach Anspruch 13, **dadurch gekennzeichnet,** **daß** das zusätzliche Filterelement (22) unter einem von 90° verschiedenen Winkel gegen das anströmende Fluid angeordnet ist.

15. Filtervorrichtung nach einem der Ansprüche 4 bis 14, **dadurch gekennzeichnet,** **daß** die Fläche der Öffnung (30) zum Feststoffabscheider (20) wesentlich kleiner als die Fläche der Innenwand des Feststoffabscheiders ist.

16. Filter vorrichtung nach einem der Ansprüche 1 bis 15, **dadurch gekennzeichnet,** **daß** der Rückführkanal (6) einen sich ändernden Durchmesser hat, der sich vorzugsweise in Rückflußrichtung verringert.

## Claims

1. Filter device for filtering fluids, with a filter membrane (2) and a device for producing a crossflow directed tangentially relative to the surface of the filter membrane, with a main body (4), arranged upstream of the filter membrane, that has a supply channel (3) extending perpendicular to the surface of the filter membrane, with a gap (5) between itself and the filter membrane in order to produce the tangentially directed crossflow, and a return channel (6), **characterized in that** the return channel (6) is fluidically connected to the supply channel (3), and **in that** a flow restriction (3') for realizing the return flow of the fluid is provided upstream of the filter membrane (2).

2. Filter device according to Claim 1, **characterized in that** the flow restriction (3') is formed by at least one tube end (6') that protrudes into the supply channel (3) and the outlet of which introduces the returned fluid into the supply channel (3) parallel to the longitudinal axis of the supply channel (3).

3. Filter device according to Claims 1 or 2, **characterized in that** a pump (6") is arranged midway in the return channel (6).

4. Filter device according to one of Claims 1 to 3, **characterized in that** a solids separator (20) is arranged in the return channel (6).

5. Filter device according to one of Claims 1 to 4, **characterized in that** at least one baffle element (7, 8, 9) is arranged upstream of the filter membrane (2) in order to produce a turblent flow.

6. Filter device according to Claim 5, **characterized in that** at least one of the baffle elements (8) contains one or more holes (10).

7. Filter device according to Claim 5 or 6, **characterized in that** the baffle elements (7, 8, 9) are inserted into and connected to one another, preferably by means of threaded sections or pins.

8. Filter device according to one of Claims 1 to 7, **characterized in that** an electrode (15) for generating an electric field in the fluid is arranged at least in the main body (4).

9. Filter device according to Claim 8, **characterized in that** at least one of the baffle elements contains an electrode (14).

10. Filter device according to Claim 8 or 9, **characterized in that** the electrodes generate an alternating electric field.

11. Filter device according to one of Claims 1 to 10, **characterized in that** the gap (5) between the underside (12) of the main body (4) and the filter membrane (2) has a width (B) that increases radially outward.

12. Filter device according to one of Claims 5 to 11, **characterized in that** at least one baffle element (9) is movably supported, preferably by means of a spring (35).

13. Filter device according to one of claims 1 to 12, **characterized in that** an additional filter element (22), as well as a valve arrangement for shutting off the fluid supply to the solids separator, is arranged between the gap (5) and the solids separator (20).

14. Filter device according to Claim 13, **characterized in that** the additional filter element (22) is arranged relative to the inflowing fluid at an angle other than 90°.

15. Filter device according to one of Claims 4 to 14, **characterized in that** the area of the opening (30) of the solids separator (20) is significantly smaller than the area of the inner wall of the solids separator.

16. Filter device according to one of Claims 1 to 15, **characterized in that** the return channel (6) has a varying diameter that preferably becomes smaller in the return flow direction.

## Revendications

1. Dispositif de filtration pour filtrer des fluides, avec une membrane filtrante (2) et un système destiné à produire un écoulement transversal dirigé tangentiellement par rapport à la surface de la membrane filtrante, avec un corps principal (4) qui est disposé en amont de la membrane filtrante et qui présente un canal d'amenée (3) perpendiculaire à la surface de la membrane filtrante, un interstice (5) courant entre le corps principal et la membrane filtrante et servant à la formation de l'écoulement transversal dirigé tangentiellement, et un canal de retour (6), **caractérisé en ce que**

le canal de retour (6) est lié au canal d'amenée (3) en ce qui concerne l'écoulement, et **en ce que** l'on prévoit, pour le retour du fluide, un étranglement d'écoulement (3') disposé en amont de la membrane filtrante (2).

2. Dispositif de filtration selon la revendication 1, **caractérisé en ce que**

   l'étranglement d'écoulement (3') est constitué par au moins une tubulure (6') dépassant dans le canal d'amenée (3) et dont la sortie conduit jusque dans le canal d'amenée le fluide refoulé, parallèlement à l'axe longitudinal du canal d'amenée (3).

3. Dispositif de filtration selon l'une des revendications 1 ou 2, **caractérisé en ce que**

   une pompe intercalée (6") est en plus disposée dans le canal de retour (6).

4. Dispositif de filtration selon l'une des revendications 1 à 3, **caractérisé en ce que**

   un séparateur de matières solides (20) est disposé dans le canal de retour (6).

5. Dispositif de filtration selon l'une des revendications 1 à 4, **caractérisé en ce que**

   en amont de la membrane filtrante (2) est disposé au moins un élément de chicane (7, 8, 9), qui fait tourbillonner l'écoulement.

6. Dispositif de filtration selon la revendication 5, **caractérisé en ce que**

   au moins l'un des éléments de chicane (8) présente un ou plusieurs trous (10).

7. Dispositif de filtration selon la revendication 5 ou 6, **caractérisé en ce que**

   les éléments de chicane (7, 8, 9) sont aboutés l'un dans l'autre et reliés l'un à l'autre, de préférence par des pièces filetées ou par des goupilles.

8. Dispositif de filtration selon l'une des revendications 1 à 7, **caractérisé en ce que**

   au moins dans le corps principal (4) est disposée une électrode (15) servant à produire un champ électrique dans le fluide.

9. Dispositif de filtration selon la revendication 8, **caractérisé en ce que**

   au moins l'un des éléments de chicane présente une électrode (14).

10. Dispositif de filtration selon la revendication 8 ou 9, **caractérisé en ce que**

    les électrodes produisent un champ électrique alternatif.

11. Dispositif de filtration selon l'une des revendications 1 à 10, **caractérisé en ce que**

    l'interstice (5) entre le dessous (12) du corps principal (4) et la membrane filtrante (2) a une largeur (B) qui augmente radialement vers l'extérieur.

12. Dispositif de filtration selon l'une des revendications 5 à 11, **caractérisé en ce que**

    au moins un élément de chicane (9) est monté de façon mobile, de préférence au moyen d'un ressort (35).

13. Dispositif de filtration selon l'une des revendications 1 à 12, **caractérisé en ce que**

    entre l'interstice (5) et le séparateur de matières solides (20) est disposé un élément filtrant supplémentaire (22), ainsi qu'un système de soupape pour couper l'amenée jusqu'au séparateur de matières solides.

14. Dispositif de filtration selon la revendication 13, **caractérisé en ce que**

    l'élément filtrant supplémentaire (22) est disposé sous un angle qui s'écarte de 90° par rapport au fluide arrivant.

15. Dispositif de filtration selon l'une des revendications 4 à 14, **caractérisé en ce que**

    la superficie de l'ouverture (30) vers le séparateur de matières solides (20) est nettement plus petite que la superficie de la paroi intérieure du séparateur de matières solides.

16. Dispositif de filtration selon l'une des revendications 1 à 15, **caractérisé en ce que**

    le canal de retour (6) a un diamètre qui varie, de préférence qui diminue dans le sens du reflux.

Fig. 1

Fig. 2A    Fig 2B

Fig 2C

EP 1 381 442 B1

Fig. 2D

4

7

Fig. 3A

4

2

Fig. 3B

Fig. 5

Fig. 4